# FASCICULE DE BREVET EUROPEEN

(11) **EP 3 218 232 B1**
(45) Date de publication et mention de la délivrance du brevet: **20.03.2019**
(21) Numéro de dépôt: 15788156.6
(22) Date de dépôt: 08.10.2015
(51) Int. Cl.: B60R 21/06, B62D 29/04

(54) **PAROI D'ARRET DE CHARGE ALLEGEE**
LEICHTBAUTRENNWAND
LIGHTWEIGHT LOAD-RETAINING PANEL

(30) Priorité: 12.11.2014 FR 1460888
(43) Date de publication de la demande: 20.09.2017
(73) Titulaire: PSA Automobiles SA, 78300 Poissy (FR)
(72) Inventeur: LEROUX, Charles, 78830 Bullion (FR); PERU, Marc, 92290 Chatenay-Malabry (FR); MARCILLE, Sylvain, 91320 Wissous (FR)
(86) Numéro de dépôt international: PCT/FR2015/052709
(87) Numéro de publication internationale: WO 2016/075376

(56) Documents cités:
- EP-A1- 1 795 434
- GB-A- 2 061 196
- GB-A- 2 465 204

## Description

L'invention concerne une paroi renforcée en matériau composite pour véhicule, et plus particulière une paroi d'arrêt de charge pour véhicule utilitaire.

Les véhicules utilitaires de type fourgon comportent une cabine dans laquelle s'installent le conducteur et les passagers, et un volume de chargement dans lequel sont placées les charges à transporter. Afin d'éviter que les charges transportées ne se déplacent dans la cabine et ne viennent blesser le conducteur, en particulier en cas de freinage important ou de choc avant, des arrêts de charges sont généralement positionnés derrière le siège du conducteur et/ou du ou des passagers.

Dans certains véhicules utilitaires de type fourgon, la cabine et le volume de chargement sont séparés par une paroi. Cette paroi permet d'isoler thermiquement et acoustiquement la cabine du volume de chargement et forme un arrêt de charge.

Le brevet GB2465204 décrit une paroi de séparation pour véhicule utilitaire disposée entre la cabine et le volume de chargement. La paroi s'étend sur toute la hauteur et la largeur du volume intérieur du véhicule, de manière à cloisonner totalement l'arrière de la cabine par rapport au volume de chargement. La paroi est formée de deux panneaux. Afin de réduire la masse de la paroi de séparation, celle-ci est réalisée en matériau composite qui comporte des fibres perpendiculaires les unes aux autres et qui s'étendent sur l'ensemble de la surface de la paroi. La paroi de séparation comporte des moyens de renforcement afin de lui donner la résistance nécessaire pour éviter que les charges embarquées dans le volume de chargement du véhicule ne passent dans la cabine, notamment en cas de freinage important ou de choc avant. Le moyen de renforcement de la paroi est réalisé par une superposition des bords des deux panneaux formant ladite paroi. Cette zone de superposition crée localement une augmentation de l'épaisseur de la paroi et forme donc une zone plus rigide. Cette zone de superposition permet de fixer les deux panneaux entre eux. Elle s'étend d'un bord à l'autre de la paroi.

L'inconvénient d'une telle paroi est qu'elle comporte des fibres sur toute sa surface pour obtenir une paroi rigide, alourdissant ladite paroi et la rendant plus chère à réaliser. De plus, étant formée de deux panneaux, elle est complexe à mettre en oeuvre.

La présente invention a pour but de réaliser une paroi de séparation entre la cabine et le volume de chargement d'un véhicule utilitaire qui soit légère, tout en étant suffisamment solide pour retenir les objets situés dans le volume de chargement en cas de freinage important ou de choc, et simple à réaliser.

Ce but est atteint selon l'invention, grâce à une paroi pour véhicule, en matériau composite constitué au moins par une matrice polymère et des fibres, ladite paroi comportant des moyens de fixation agencés pour permettre la fixation de ladite paroi à la structure d'un véhicule caractérisée en ce que les fibres sont agencées pour former une ou plusieurs bandes qui s'étendent d'un bord à un autre bord de la paroi, et dont la largeur desdites bandes est inférieure à la longueur des bords de la paroi entre lesquelles elles s'étendent, de manière à créer localement un ou plusieurs renforts dans la paroi.

Ainsi avantageusement, la paroi est légère et résistante grâce à l'utilisation d'un matériau composite et des fibres renforçant ladite paroi, lesdites fibres formant au moins une bande de renfort ne s'étendant pas sur toute la surface de ladite paroi. La quantité de fibres utilisées pour renforcer la paroi est donc limitée. La masse est ainsi particulièrement légère.

La ou les bandes de renfort, formées par les fibres, sont noyées dans l'épaisseur de la paroi et forment donc le matériau composite.

En s'étendant d'un bord à l'autre de la paroi, la ou les bandes de renfort vont donner une bonne résistance mécanique à la paroi pour retenir par exemple les charges placées derrière ladite paroi lorsque la paroi est une paroi de séparation située derrière les passagers d'un véhicule et en cas de freinage ou de choc avant. En effet, les bandes de renfort en fibres étant particulièrement résistances aux efforts de traction, elles confèrent à la paroi une bonne résistance vis-à-vis des efforts poussant sur sa surface.

De préférence, la paroi est destinée à créer une paroi de séparation entre un volume de chargement et une cabine pour un conducteur et/ou des passagers, et formant un arrêt de charge derrière le conducteur et/ou les passagers.

La largeur des bandes est de préférence inférieure à la moitié de la longueur des bords entre lesquelles elles s'étendent, ou encore inférieure au quart de la longueur desdits bords.

Selon un mode de réalisation préféré de l'invention, la ou les bandes de renfort sont constituées par au moins par une nappe de fibres unidirectionnelles non tissées orientées toutes dans une même direction parallèle à la direction longitudinale de la bande, ou sont constituées au moins par une nappe de fibres tissées, ou sont constituées par au moins un élément tubulaire en fibres tissées.

Ces configurations offrent une résistance à la traction de la ou des bandes de renfort particulièrement élevée. La résistance de la paroi est ainsi avantageusement élevée, et la quantité de matière utilisée pour réaliser la paroi faible. La masse de la paroi est ainsi faible. L'élément tubulaire en fibres tissées peut être obtenu par tricotage des fibres, par pultrusion ou par pullwinding (pultrusion tissée).

Dans un mode de réalisation de l'invention, la paroi est de forme sensiblement rectangulaire et au moins une bande de renfort s'étend d'un des bords de la paroi au bord opposé, ladite bande étant distante des autres bords.

La forme rectangulaire permet à la paroi d'être fixée à l'intérieur d'un véhicule et de suivre le pavillon, le plancher et les bords latéraux de l'intérieur dudit véhicule. La position de la ou des bandes reliant l'un des bords de la paroi au bord opposé permet avantageusement d'obtenir une paroi solide retenant les charges placées derrière elle, en particulier en cas de choc avant ou de freinage important. En plaçant la ou les bandes de manière à ce qu'elles soient distantes des bords autres que les bords sur lesquels sont reliées ses extrémités, les charges qui sont poussées sur la partie milieu de la paroi en cas de choc ou de freinage brutal, pourront être retenue en limitant les risques de déformation ou de rupture de ladite paroi grâce à cette ou ces bandes de renfort.

De préférence, la paroi comporte au moins deux bandes de renfort parallèles s'étendant d'un des bords de la paroi au bord opposé, formant au moins deux zones renforcées. Dans une autre variante, au moins deux bandes de renfort ne sont pas parallèles, en se croisant ou non.

Dans un autre mode de réalisation de l'invention, la paroi a une forme sensiblement rectangulaire et comporte au moins deux bandes de renfort s'étendant d'un bord au bord opposé et sont positionnées de manière à former une forme de X, de V ou de Y.

Les bandes de renfort renforcent ainsi d'avantage certaines zones de la paroi grâce à la coopération des bandes entre-elles.

Dans un autre mode de réalisation de l'invention, la paroi comporte une ouverture positionnée entre les branches du X, V ou Y dessinées par les bandes de renfort.

Ainsi, les bandes de renfort s'étendent d'un bord au bord opposé de la paroi et contournent l'ouverture créée dans la paroi sans être interrompues. Avantageusement, la paroi peut ainsi comporter une ouverture, permettant par exemple de voir au travers de la paroi, tout en conservant sa résistance.

D'après l'invention, les moyens de fixation sont situées dans les extrémités de la ou des bandes de renfort.

Les efforts passant dans les bandes de renfort sont ainsi avantageusement transmis directement à la structure du véhicule sur laquelle est fixée la paroi. Les efforts passant dans la ou les parties de la paroi ne comportant pas les bandes de renfort sont limités. Les risques de fissuration de la paroi sont limités.

Dans un autre mode de réalisation, les extrémités de la ou des bandes de renfort situées sur les bords de la paroi sont plus larges que le reste de la ou des bandes de renfort.

Avantageusement, les efforts sont ainsi répartis sur une grande surface large au niveau de la fixation avec la structure du véhicule. Les risques de rupture au niveau des extrémités des bandes comportant les moyens de fixation ou au niveau des moyens de fixation sont ainsi limités.

L'invention porte aussi sur un véhicule comportant une paroi suivant l'une des revendications précédentes.

Ainsi, le véhicule comportant une telle paroi est léger.

Dans un mode de réalisation préféré de l'invention portant sur un véhicule, la paroi délimite une cabine destinée à recevoir des passagers et un volume de chargement destinée à recevoir des objets à transporter, la paroi étant positionnée parallèlement à l'axe transversal du véhicule.

Dans un autre mode de réalisation de l'invention portant sur un véhicule, la paroi s'étend sur toute la hauteur et la largeur de l'intérieur du véhicule de manière à créer une paroi de séparation entre la cabine et le volume de chargement.

Dans le cas où le véhicule comporte une paroi avec des bandes de renfort formant un X, un V ou un Y, lesdites bandes s'étendent de manière à ce que les extrémités des formes en X, en V ou en Y soient situées sur les bords haut et bas de la paroi, le bord haut et le bord bas étant défini par rapport au haut et au bas du véhicule.

L'invention sera mieux comprise à la lecture de la description qui va suivre, donnée uniquement à titre d'exemple et faite en se référant aux dessins annexés, sur lesquels :
- La fig. 1 est une vue en perspective d'une paroi suivant l'invention dans un premier mode de réalisation ;
- La fig. 2 est une vue en perspective d'une paroi suivant l'invention dans une variante dans laquelle la paroi comporte une ouverture ;
- La fig. 3 est une vue en perspective d'une paroi suivant l'invention dans une autre variante dans laquelle la paroi a une hauteur plus faible que les variantes des fig. 1 et 2.
- Les fig. 4a et 4b représentent chacune un véhicule comportant une paroi suivant une variante de l'invention, la paroi étant vue par transparence au travers du véhicule.

Les dessins sont des représentations schématiques pour faciliter la compréhension de l'invention. Les composants ne sont pas forcément représentés à l'échelle. Les mêmes références correspondent aux mêmes composants d'une figure à l'autre.

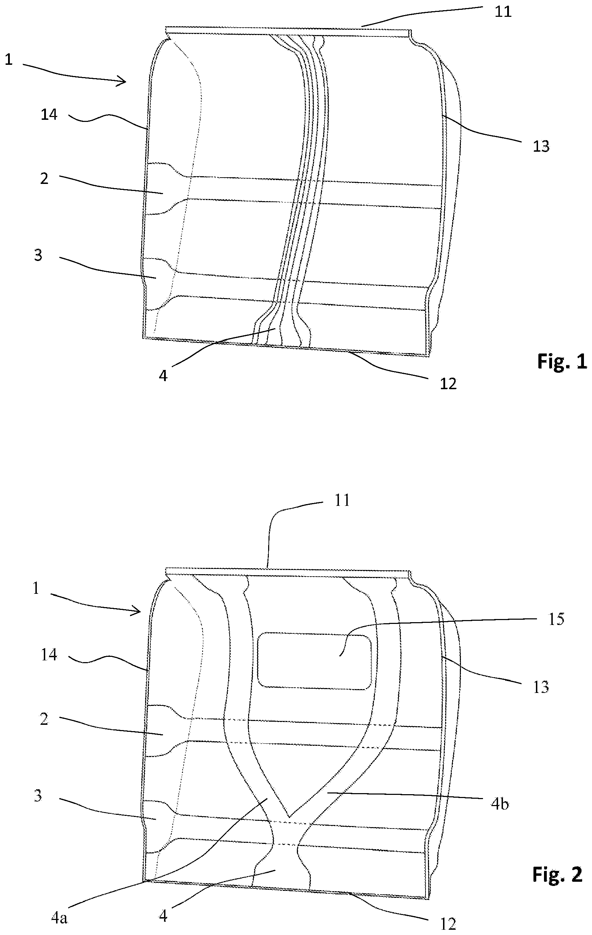

La fig. 1 montre une paroi 1 d'arrêt de charge suivant l'invention pour un véhicule, de préférence un véhicule utilitaire, comportant trois bandes de renfort 2, 3 et 4. La périphérie de la paroi 1 a une forme générale rectangulaire, de manière à ce que les bords de ladite paroi 1 puissent s'appuyer au plancher, au pavillon et aux bords latéraux du véhicule, à l'intérieur dudit véhicule.

Lorsque la paroi 1 est placée derrière des sièges du véhicule, la forme bombée de la paroi 1 permet aux dossiers desdits sièges de s'incliner d'avantage vers l'arrière que dans le cas où la paroi est plane. En variante, la paroi peut être plate, ou comporter plusieurs zones bombées localement agencées pour faire face chacune au dos d'un dossier de siège.

La paroi 1 est réalisée en matériau composite formé d'une matrice en polymère et de fibres. Les fibres sont configurées de manière à former des bandes de renfort 2, 3, 4 s'étendant d'un bord à l'autre de la paroi 1. Elles ne sont donc pas réparties de manières homogènes sur toute la surface de la paroi 1 lors de la mise en forme de ladite paroi 1. Les bandes de renforts 2, 3 et 4 s'étendent chacune d'un des bords de la paroi au bord opposé. Dans la variante représentée en fig. 1, la paroi 1 comporte une bande de renfort verticale 4 reliant un bord haut 11 et un bord bas 12 de ladite paroi 1, et deux bandes de renforts horizontales 2 et 3 reliant l'un des bords latéraux 13 ou 14 de la paroi à l'autre bord latéral 14 ou 13, l'horizontal et la verticale étant définies par rapport à l'horizontale et la verticale du véhicule dans lequel la paroi est installée. Les extrémités de la bande de renfort verticale 4 sont positionnées sensiblement au niveau du milieu du bord haut 11 et du bord bas 12 de la paroi. Les extrémités des bandes de renfort 2, 3 et 4 s'élargissent afin de répartir les efforts sur une plus grande distance au niveau des bords de la paroi. Ces parties élargies des bandes de renfort 2, 3 ou 4 comportent des moyens de fixation, non représentés, permettant de fixer la paroi 1 à la structure du véhicule. Ces moyens de fixation peuvent être par exemple des inserts métalliques ou des trous agencés pour recevoir des rivets, des vis ou des systèmes vis-écrou permettant la fixation de la paroi à la structure du véhicule. Dans le cas où les moyens de fixation sont formés de trous traversant l'épaisseur de la paroi au niveau de extrémités des bandes de renfort 2, 3 et 4, lesdits trous peuvent être percés de manière à couper les fibres composant lesdites bandes 2, 3 et 4, ou en variante, lesdites fibres peuvent être positionnées de manière à contourner les trous qui peuvent être réalisé soit par perçage de la paroi 1, soit lors de la mise en forme de la paroi 1.

De la colle peut être appliquée sur les bords 11, 12, 13 et 14 de la paroi 1 pour renforcer la fixation de ladite paroi sur le véhicule et diminuer le nombre de fixation par rivets, par vis ou par systèmes vis-écrou.

En variante, d'autres positions de la bande de renfort verticale 4 sont possibles.

Dans une autre variante, la paroi peut comporter plusieurs bandes de renfort verticales 4 s'étendant entre le bord haut 11 et le bord bas 12 de la paroi 1.

Dans une autre variante, la paroi peut ne comporter qu'une seule bande de renfort horizontale 2. Dans ce cas, la bande est placée de préférence dans la zone de la paroi 1 située entre le milieu de ladite paroi 1 et le milieu de la hauteur de la paroi 1, la hauteur étant la dimension de la paroi 1 suivant la direction verticale du véhicule lorsque la paroi 1 est installée dans un véhicule.

Dans une autre variante, la paroi peut comporter plus de deux bandes de renfort 2 et 3.

Dans une autre variante, la paroi ne comporte qu'une ou plusieurs bandes de renfort verticales 4, ou que une ou plusieurs bandes de renfort verticales 4.

Lorsque la paroi 1 est installée dans un véhicule, la bande de renfort verticale 4 est sensiblement parallèle à un plan défini par l'axe vertical et longitudinal du véhicule. Les bandes de renfort horizontales 2 et 3 sont sensiblement dans un plan défini par l'axe transversal et longitudinal du véhicule.

Les bandes de renfort 2, 3 et 4 en fibres sont prises dans la matière formant la matrice de la matière composite de la paroi 1. Les bandes de renfort 2, 3 et 4 peuvent être réalisées par des fibres unidirectionnelles, ou des fibres tissées obtenues par tricotage formant un élément plan ou formant un élément tubulaire. En variante, les bandes de renfort 2, 3 et 4 peuvent aussi être réalisées par des procédés connus sous les noms de pultrusion ou de pullwinding (pultrusion tissée).

Les bandes de renfort 2, 3 et 4 en fibres forment les renforts du matériau composite par coopération avec le matériau de la matrice.

La matrice du matériau composite peut être du polypropylène (PP), du polychlorure de vinyle (PVC), ou du polyéthylène (PET) ou tout autre polymère équivalent.

Les fibres des bandes de renforts 2, 3 ou 4 sont de préférence en fibres de verre. D'autres types de fibres peuvent être utilisés comme par exemple des fibres de carbone.

La paroi peut être réalisée par thermoformage. Une feuille de plastique, comme par exemple une feuille en acrylonitrile butadiène styrène (ABS), en polyméthyle méthacrylate (PMMA) ou en polychlorure de vinyle (PVC), comportant déjà les bandes de renforts 2, 3 et 4 dans son épaisseur, est préalablement chauffée puis mise en forme dans un moule, notamment par la technique de la mise en forme sous vide, de manière à obtenir la paroi 1. Les bandes de renfort 2, 3 et 4 sont de préférence prédisposées dans la feuille de plastique de manière à ce que la déformation de ladite plaque de plastique amène lesdites bandes de renfort 2, 3 et 4 dans les positions finales désirées.

En variante, la paroi 1 peut être réalisée par thermo-estampage. La mise en forme diffère du thermoformage par le fait que la feuille de plastique préchauffée comportant les bandes de renfort 2, 3 et 4, est pressée à chaud dans un moule.

La feuille de plastique peut comporter des couches de matériaux différents, comme par exemple une couche de matériau adaptée à absorber les ondes acoustiques, ou adaptée à limiter le transfert de chaleur au travers de la feuille, ou encore une couche permettant de faire un revêtement esthétique, ou une combinaison de ces couches. Ainsi, la paroi 1 peut être mise en forme avec ses différentes couches. Une seule opération de mise en forme suffit pour former l'ensemble de la paroi 1 qui est prête à être installée, intégrant des fonctions d'isolation thermique, acoustique ou esthétique, ou une combinaison de ces fonctions.

Dans une autre variante, la paroi 1 peut être réalisée par une feuille comportant des fibres pré-imprégnées formant les bandes de renfort 2, 3 et 4, plus couramment connue sous le nom de SMC, résultant de l'association d'un renfort de fils continus et d'une pâte de résine polyester qui comprend tous les ingrédients nécessaires au moulage de la paroi 1. La feuille est placée dans un moule chauffé. Une fois le moule fermé, la matière s'écoule et remplit totalement l'empreinte du moule sous l'action de la pression de fermeture et de la température du moule.

Dans une autre variante, la paroi 1 est formée en plaçant dans un moule les bandes de renfort 2, 3 et 4, puis de la résine est injectée dans le moule une fois le moule refermé.

Dans une autre variante de mise en forme de la paroi, les bandes de renfort 2, 3 et 4 sont préalablement disposées à l'intérieur d'un moule avant sa fermeture et son verrouillage. Une fois le moule refermé, une résine polymère est injectée dans le moule en un ou plusieurs points selon l'importance de la pièce. Les bandes de renfort 2, 3 et 4 sont imprégnées et recouvertes par la résine. Ce procédé est connu sous le nom de RTM.

Dans une autre variante, la paroi est réalisée en plaçant les bandes de renfort 2 , 3 et 4 dans le moule, les bandes de renfort 2, 3 et 4 pouvant être pré-imprégnées, puis en plaçant un polymère sous forme de poudre dans le moule, le moule étant ensuite fermé et chauffé pour former la paroi en matériau composite.

Ces modes de réalisation permettent de plus de réaliser des formes complexes et d'intégrer des fonctions, comme par exemple de réaliser directement lors de la mise en forme de la paroi 1 une grille d'aération, ou des formes permettant de rigidifier la paroi 1.

Lorsque les bandes de renfort 2, 3 et 4 sont des éléments en fibres tubulaires, réalisées par exemple par pultrusion, pullwinding (pultrusion tissée) ou tricotage, elles sont installées dans le moule de mise en forme puis déformés lors de la fermeture du moule. Dans le cas du thermoformage, les bandes de renfort 2, 3 et 4 doivent être dans la feuille qui est ensuite mise en forme.

La fig. 2 montre une variante de réalisation d'invention dans laquelle la paroi 1 comporte une ouverture 15. Cette ouverture 15 peut recevoir une vitre. La bande de renfort verticale 4 comporte deux branches 4a et 4b, passant de chaque côté de l'ouverture 15, de manière à former un Y ou un V.

Dans une variante non représentée, la paroi 1 peut comporter deux bandes de renfort verticales 4 qui se croisent de manière à former une forme générale en X.

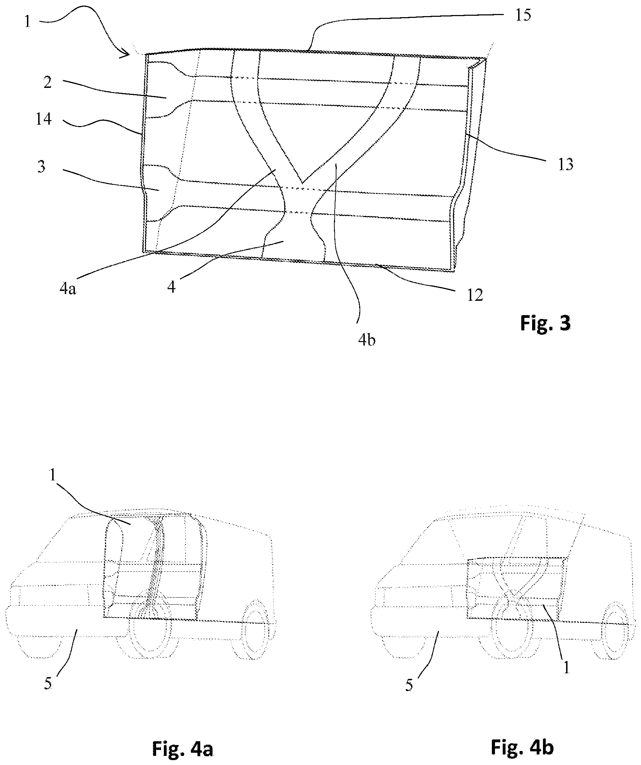

La fig. 3 montre une variante de l'invention dans laquelle la hauteur de la paroi 1 est plus faible que la hauteur de l'intérieur du véhicule dans lequel ladite paroi est installée, de manière à ce que, une fois installée dans le véhicule, un espace est laissé libre entre le bord haut 11 de ladite paroi 1 et le pavillon du véhicule. La fig. 4b illustre l'implantation de cette variante de réalisation dans un véhicule utilitaire 5 de type fourgon. La position des bandes de renfort 2, 3 et 4 est adaptée en fonction des efforts que doit supporter la paroi 1 en cas de freinage fort ou de choc avant, pour retenir les charges disposées de l'autre côté de la paroi 1 par rapport aux passagers.

En variante, la paroi 1 peut comporter une partie montant jusqu'au pavillon du véhicule derrière le siège du conducteur, à la manière du mode de réalisation représenté en fig. 1, tandis que la partie derrière le siège du ou des passagers est plus basse à la manière de la variante représentée en fig. 3.

La fig. 4a représente un véhicule 5 équipé de la paroi 1 suivant le mode de réalisation représenté en fig. 1. Les bandes de renfort horizontales 2 et 3 s'étendent d'un bord latéral à l'autre bord latéral de l'intérieur du véhicule, tandis que la bande de renfort verticale 4 s'étend du plancher jusqu'au pavillon du véhicule.

En variante de réalisation, la paroi 1 peut être réalisée en matériau composite comportant une matrice en matériau plastique, des fibres tissées s'étendant sur toute la surface de la paroi 1, et des bandes de renfort 2, 3 et 4 s'étendant d'un bord à l'autre de ladite paroi 1. Cette variante permet d'avoir une paroi 1 rigide sur l'ensemble de sa surface, afin par exemple de diminuer les vibrations de ladite paroi 1, tandis que les bandes de renforts 2, 3 et 4 permettent à la paroi 1 d'être solide pour retenir les charges situées dans le volume de chargement du véhicule, derrière la paroi 1, en cas de freinage important ou de choc avant.

Ce type de conception de paroi 1 peut être appliqué pour d'autres parois du véhicule, comme par exemple pour une porte, un plancher, ou encore un pavillon de véhicule.

## Revendications

1. Paroi (1) d'arrêt de charge pour véhicule, en matériau composite constitué au moins par une matrice polymère et des fibres, ladite paroi (1) comportant des moyens de fixation agencés pour permettre la fixation de ladite paroi (1) à la structure d'un véhicule (5) **caractérisée en ce que** les fibres sont agencées pour former une ou plusieurs bandes (2, 3, 4) qui s'étendent d'un bord à un autre bord de la paroi (1), et dont la largeur desdites bandes (2,3,4) est inférieure à la longueur des bords de la paroi (1) entre lesquelles elles s'étendent, de manière à créer localement un ou plusieurs renforts dans la paroi (1), et les moyens de fixation sont situées dans les extrémités de ladite ou desdites bandes de renfort (2, 3, 4).

2. Paroi (1) suivant la revendication 1 **caractérisée en ce que** chaque bande (2, 3, 4) est constituée par au moins par une nappe de fibres unidirectionnelles non tissées orientées toutes dans une même direction parallèle à la direction longitudinale de la bande (2, 3, 4), ou sont constituées au moins par une nappe de fibres tissées, ou sont constituées au moins par un élément tubulaire en fibres tissées.

3. Paroi (1) suivant l'une des revendications 1 ou 2 **caractérisée en ce que** ladite paroi (1) est de forme sensiblement rectangulaire et au moins une bande de renfort (2, 3, 4) s'étend d'un des bords de la paroi (1) au bord opposé, ladite bande étant distante des autres bords.

4. Paroi (1) suivant l'une des revendications précédentes **caractérisées en ce qu'**elle a une forme rectangulaire et qu'elle comporte au moins deux bandes de renfort (4a, 4b) s'étendant d'un bord de la paroi (1) au bord opposé et sont positionnées de manière à former une forme de X, de V ou de Y.

5. Paroi (1) suivant la revendication 4 **caractérisée en ce qu'**elle comporte une ouverture (15) positionnée entre les branches du X, V ou Y dessinées par les bandes de renfort (4a, 4b).

6. Paroi (1) suivant l'une des revendications précédentes **caractérisée en ce que** les extrémités de la ou des bandes de renfort (2, 3, 4) situées sur les bords de la paroi sont plus larges que le reste de la ou des bandes de renfort (2, 3, 4).

7. Véhicule (5) comportant une paroi (1) suivant l'une des revendications précédentes.

8. Véhicule (5) suivant la revendication précédente **caractérisé en ce que** la paroi (1) délimite une cabine destinée à recevoir des passagers et un volume de chargement destinée à recevoir des objets à transporter, la paroi (1) étant positionnée parallèlement à l'axe transversale du véhicule (5).

9. Véhicule (5) suivant la revendication précédente **caractérisée en ce que** la paroi (1) s'étend sur toute la hauteur et la largeur de l'intérieur du véhicule (5) de manière à créer une paroi de séparation entre la cabine et le volume de chargement.

## Patentansprüche

1. Leichtbautrennwand (1) für Fahrzeug, aus Verbundwerkstoff, der mindestens aus einer Polymermatrix und Fasern besteht, wobei die Wand (1) Befestigungsmittel umfasst, die eingerichtet sind, um das Befestigen der Wand (1) an der Struktur eines Fahrzeugs (5) zu erlauben, **dadurch gekennzeichnet, dass** die Fasern eingerichtet sind, um ein oder mehrere Bänder (2, 3, 4) zu bilden, die sich von einem Rand zu einem anderen Rand der Wand (1) erstrecken und wobei die Breite der Bänder (2, 3, 4) kleiner ist als die Länge der Ränder der Wand (1), zwischen welchen sie sich erstrecken, so dass lokal eine oder mehrere Verstärkungen in der Wand (1) geschaffen werden, und die Befestigungsmittel in den Enden des oder der Verstärkungsbänder (2, 3, 4) liegen.

2. Wand (1) nach Anspruch 1, **dadurch gekennzeichnet, dass** jedes Band (2, 3, 4) aus mindestens einer Lage Einrichtungs-Vliesfasern besteht, die alle in eine selbe Richtung parallel zu der Längsrichtung des Bands (2, 3, 4) ausgerichtet sind, oder mindestens aus einer Lage gewebter Fasern oder mindestens aus einem röhrenförmigen Element aus gewebten Fasern besteht.

3. Wand (1) nach einem der Ansprüche 1 oder 2, **dadurch gekennzeichnet, dass** die Wand (1) im Wesentlichen rechteckige Form hat und dass sich mindestens ein Verstärkungsband (2, 3, 4) von einem der Ränder der Wand (1) zu dem entgegengesetzten Rand erstreckt, wobei das Band von den anderen Rändern beabstandet ist.

4. Wand (1) nach einem der vorstehenden Ansprüche, **dadurch gekennzeichnet, dass** sie eine Rechteckform hat und dass sie mindestens zwei Verstärkungsbänder (4a, 4b) umfasst, die sich von einem Rand der Wand (1) zu dem entgegengesetzten Rand erstrecken und derart positioniert sind, dass sie eine Form eines X, eines V oder eines Y bilden.

5. Wand (1) nach Anspruch 4, **dadurch gekennzeichnet, dass** sie eine Öffnung (15) umfasst, die zwischen den Schenkeln des X, V oder Y, die von den Verstärkungsbändern (4a, 4b) gezeichnet werden, positioniert ist.

6. Wand (1) nach einem der vorstehenden Ansprüche, **dadurch gekennzeichnet, dass** die Enden des Verstärkungsbands oder der Verstärkungsbänder (2, 3, 4), die auf den Rändern der Wand liegen, breiter sind als der Rest des Verstärkungsbands oder der Verstärkungsbänder (2, 3, 4).

7. Fahrzeug (5), das eine Wand (1) nach einem der vorstehenden Ansprüche umfasst.

8. Fahrzeug (5), nach dem vorstehenden Anspruch, **dadurch gekennzeichnet, dass** die Wand (1) eine Fahrgastzelle abgrenzt, die dazu bestimmt ist, Fahrgäste zu empfangen, und einen Laderaum, der dazu bestimmt ist, Objekte, die zu transportieren sind, aufzunehmen, wobei die Wand (1) parallel zu der Querachse des Fahrzeugs (5) positioniert ist.

9. Fahrzeug (5) nach dem vorstehenden Anspruch, **dadurch gekennzeichnet, dass** sich die Wand (1) auf der gesamten Höhe und der Breite des Inneren des Fahrzeugs (5) derart erstreckt, dass eine Trennwand zwischen der Fahrgastzelle und dem Laderaum gebildet wird.

## Claims

1. A load-retaining panel (1) for a vehicle, made of a composite material consisting of at least one polymer matrix and fibres, said panel (1) comprising attachment means arranged to permit the attaching of said panel (1) to the structure of a vehicle (5), **characterized in that** the fibres are arranged so as to form one or several strips (2, 3, 4) which extend from one edge to another edge of the panel (1), and the width of said strips (2, 3, 4) is less than the length of the edges of the panel (1) between which they extend so as to create locally one or several reinforcements in the panel (1), and the attachment means are situated in the ends of said reinforcement strip (s) (2, 3, 4).

2. The panel (1) according to Claim 1, **characterized in that** each strip (2, 3, 4) is constituted by at least one layer of non-woven unidirectional fibres, all oriented in the same direction parallel to the longitudinal direction of the strip (2, 3, 4) or are constituted at least by a layer of woven fibres, or are constituted at least by a tubular element of woven fibres.

3. The panel (1) according to one of Claims 1 or 2, **characterized in that** said panel (1) is of substantially rectangular shape and at least one reinforcement strip (2, 3, 4) extends from one of the edges of the panel (1) to the opposite edge, said strip being distant from the other edges.

4. The panel (1) according to one of the preceding claims, **characterized in that** it has a rectangular shape and that it comprises at least two reinforcement strips (4a, 4b) extending from one edge of the wall (1) to the opposite edge and which are positioned so as to form an X, V or Y shape.

5. The panel (1) according to Claim 4, **characterized in that** it comprises an opening (15) positioned between the branches of the X, V or Y formed by the reinforcement strips (4a, 4b).

6. The panel (1) according to one of the preceding claims, **characterized in that** the ends of the reinforcement strip(s) (2, 3, 4) situated on the edges of the wall are wider than the remainder of the reinforcement strip (s) (2, 3, 4).

7. A vehicle (5) comprising a wall (1) according to one of the preceding claims.

8. The vehicle (5) according to the preceding claim, **characterized in that** the wall (1) delimits a cab intended to receive passengers and a loading volume intended to receive objects to be transported, the panel (1) being positioned parallel to the transverse axis of the vehicle (5).

9. The vehicle (5) according to the preceding claim, **characterized in that** the panel (1) extends over the entire height and the width of the interior of the vehicle (5) so as to create a separation wall between the cab and the loading volume.
